# EUROPEAN PATENT SPECIFICATION

(11) **EP 3 107 398 B1**
(45) Date of publication and mention of the grant of the patent: **07.04.2021**
(21) Application number: 15752153.5
(22) Date of filing: 18.02.2015
(51) Int. Cl.: A21D 2/16, A23L 7/122, A23P 30/25, A23P 20/25

(54) **TRIPLE-EXTRUDED SNACK PRODUCT**
DREIFACH EXDRUDIERTES SNACKPRODUKT
PRODUIT DE COLLATION TRIPLEMENT EXTRUDÉ

(30) Priority: 18.02.2014 US 201461941297 P
(43) Date of publication of application: 28.12.2016
(73) Proprietor: Intercontinental Great Brands LLC, East Hanover, NJ 07936 (US)
(72) Inventor: KINO, Alan, J., East Hanover, NJ 07936 (US); PATEL, Nimesh, K., East Hanover, NJ 07936 (US); ERRANDONEA, Francois, East Hanover, NJ 07936 (US); KASEGRANDE, Gay, A., East Hanover, NJ 07936 (US)
(74) Representative: Boult Wade Tennant LLP
(86) International application number: PCT/US2015/016261
(87) International publication number: WO 2015/126871

(56) References cited:
- WO-A1-2012/151201
- WO-A1-2012/152650
- US-A1- 2002 098 267
- US-A1- 2007 031 542
- US-A1- 2009 220 654
- US-A1- 2010 034 926
- DATABASE GNPD [Online] MINTEL; 23 October 2012 (2012-10-23), anonymous: "Crunchy Biscuits with Macchiato Cream Filling", XP055575892, retrieved from www.gnpd.com Database accession no. 1914463

## Description

### BACKGROUND OF THE INVENTION

The present invention generally relates to extruded baked snack food products having a desired texture and taste of a light and crispy exterior shell and optionally a soft and creamy filling interior. The following disclosure also relates to dual texture products such as extruded dough products having a casing and a filling. Increasing the level of protein in extruded dough-based products can increase the health benefits of the product. Higher levels of protein have been known however, to detract from the appealing texture of some dough-based extruded products. An extruded product that delivers on both the health attributes of a higher protein product and also on a pleasing texture is highly sought after by consumers WO2012/151201 discloses a filled foodstuff including an edible filling and a crispy baked casing surrounding the edible filling, the baked casing having an outer surface with a porosity less than a porosity of an inner portion of the baked casing, and the baked casing having a dry weight that is about 60 wt% to about 70 wt% of the dry weight of the filled foodstuff.

The invention is defined by the appended claims.

### BRIEF SUMMARY OF THE INVENTION

According to the present invention, a baked, triple-extruded bite-size foodstuff snack product includes (a) an extruded dough-based casing component including a protein source comprising soy flour protein, the casing having a protein level of at least 6% by weight of the casing component, and having a maximum break force of 1500 grams to 4000 grams; and (b) an extruded filling component completely surrounded by the casing component, wherein the weight ratio of the casing component to the filling component in the extruded foodstuff is about 60:40; wherein the casing component and filling component are triple extruded with an air die; and wherein the product includes at least 5 grams of protein in 30 grams of product.

In some embodiments, the extruded foodstuff has a length of about 19 mm to about 26 mm. In some embodiments, the extruded foodstuff has a width of about 19 mm to about 26 mm. In some embodiments, the extruded foodstuff has a height of about 7 mm to about 11 mm. In some embodiments, soy flour protein is the sole source of protein in the casing component. In some embodiments, the casing component further comprises whole wheat flour, graham flour, brown rice flour, sugar, salt, vanilla, and honey. In some embodiments, the casing component further comprises calcium carbonate, inulin, and oat fiber.

In some embodiments, the casing component consists essentially of soy flour, whole wheat flour, brown rice flour, sugar, salt, vanilla, honey, calcium carbonate, inulin, oat fiber, and water.

In some embodiments, the filling component comprises at least one of a fat-based chocolate-flavored crème, a fat-based vanilla-flavored crème, a fat-based fruit crème, and a water-based fruit filling. According to the invention, the casing component and filling component are triple extruded with an air die such that the texture of the baked, extruded foodstuff is more crispy and less crunchy than a baked foodstuff having a substantially identical casing formulation and filling formulation but which is co-extruded without an interposed air extrusion stream. The extruded filling component is completely surrounded by the casing component.

In some embodiments, the casing component includes about 20 wt% to about 25 wt% whole wheat flour, about 10 wt% to about 12 wt% brown rice flour. In some embodiments, the casing component includes up to 2 wt% calcium carbonate, up to 1 wt% inulin, and up to 0.5 wt% oat fiber.

### BRIEF DESCRIPTION OF THE SEVERAL VIEWS OF THE DRAWINGS

The foregoing summary, as well as the following detailed description of certain embodiments of the food product will be better understood when read in conjunction with the following exemplary embodiments and the appended drawings.
Fig. 1 is a top-view of representative samples of an embodiment of the invention;
Fig. 2 is a side cut-away view of a representative sample of an embodiment of the invention; and,
Fig. 3 is a side cut-away view of a representative sample of an embodiment of the invention.

### DETAILED DESCRIPTION OF THE INVENTION

Some embodiments of the compositions and methods of the present invention relate to an extruded snack product that has an appealing texture (e.g., a light, crispy texture) and also delivers a higher level of protein (e.g., a good source or excellent source of protein). The protein level is at least 5 g of complete in 30 grams of product and/or in some embodiments about 10% of recommended daily values. The product includes a casing and a filling. In some embodiments, the casing is a dough-based casing and the filling is a fat based or fruit based filling. In some embodiments, the product may maintain a multiple texture (e.g. a dual texture) for an extended period of time after cooking (e.g., baking, frying) and, in some embodiments, throughout the shelf life of the product. In some embodiments, the dual texture of the product is maintained over a prolonged period of time by formulating the casing and/or filling portion to include a fiber blend.

The product is triple extruded, the three extrusion streams being casing, filling, and a gaseous phase (e.g., air). The extruded snack product includes a casing that completely surrounds the filling component. Also, preferably, to ensure the integrity of the casing enveloping the filling, a crimper or chain die is employed to seal the casing. The product, in some embodiments, also includes at least 7 g of whole grain per a 30 g serving. The grain portion used in the product may also be substantially all whole grain or 100% whole grain. The product may also include a good source of calcium at all moisture levels. Surprisingly, all of these levels (and one or more of the attributes described below) may be present in an extruded dough-based baked product that still delivers on the desired texture.

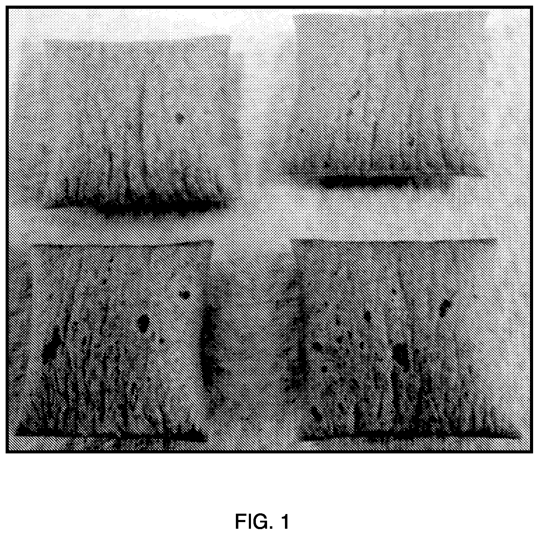

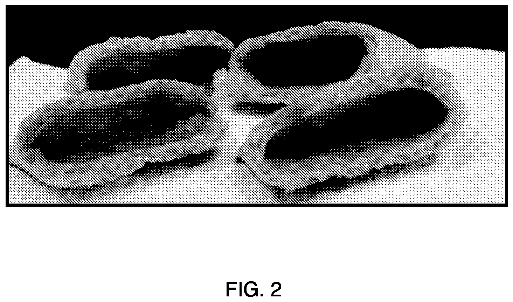

The casing component can have an external surface and can have any shape suitable for a snack-sized foodstuff. Referring to FIG. 1, in some embodiments the extruded snack product can be a pillow-shaped extruded snack product which features a shape that is generally foursided (e.g., square or rectangular) when viewed from the top, with sides that may be approximately straight, or may have a slight convex or concave curvature towards or away from the center of the square. When viewed from the side, as shown in FIG. 2, the extruded snack product has the general shape of a *vesica piscis.* It is to be understood that the term pillow shaped includes shapes that are not perfectly symmetrical about any axis. Some embodiments may include other shapes such as spheroid, prolate spheroid (e.g. coffee bean), oblate spheroid (e.g. lentil), and cylindrical (e.g. hockey puck).

There can be variation in the shape from one extruded foodstuff to the next, and each extruded foodstuff may display variations in the topography that render the extruded foodstuff asymmetrical or somewhat irregularly shaped. For example, there may be variation in the thickness, width, or depth of a single casing component.

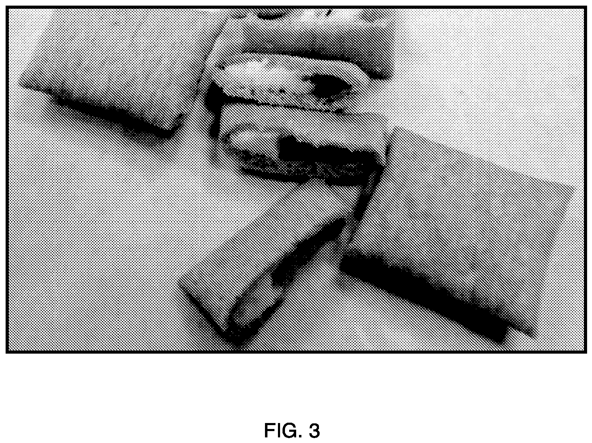

FIG. 3 is a side cut-away view of one embodiment of the extruded snack product with a filling. In this embodiment, the filling is completely surrounded by the casing component. The filling level may vary; e.g., the embodiment illustrated in FIG. 3 illustrates a product with a filling that does not completely fill the interior of the extruded foodstuff. In other embodiments, the filling substantially fills the entire casing annulus. The snack product of FIG. 3 may generally be prepared by an extrusion process extruding a casing portion together with a filling through an extrusion die to form a ribbon or rope and then shaping the ribbon or rope into individual pieces. According to the invention, the product is triple extruded using a die that is configured and dimensioned to deliver casing, filling and gaseous phase interposed between the extruded filling and the extruded casing.

### Casing Component

The casing components of the invention include a nutritional protein source. Flour based protein sources include soy flour, and may further include one or more of rice flour, graham flour, modified pea protein flour, chick pea protein flour, regular pea protein flour, and the like, and combinations thereof. Other grains or additives may be included to contribute to total protein content such as, for example, one or more of dairy by-products, enzyme modified milk powder, whey, egg or egg by-products, soy or soy isolates, and the like, and combinations thereof. The protein source in the baked casing component may be included in an amount, based upon the dry weight of the casing of at least 70 wt% of the casing component; at least 75 wt% of the casing component; at least 80 wt% of the casing component; at least 85 wt% of the casing component; at least 90 wt% of the casing component; or at least 95 wt% of the casing component. In some embodiments, the protein source in the baked casing component is included in an amount, based on the dry weight of the casing component, of about 75 wt% to about 95 wt% or about 80 wt% to about 90 wt%.

In one embodiment, the largest amount of protein in the casing component on a weight basis is derived from soy flour. In some embodiments using soy protein (e.g., from soy flour) as the primary high protein source in the casing is preferable over whey protein, pea protein or other flours because of the unique functionality of the soy protein at the high levels of protein in the casing component.

For example, soy flour may contribute about 60 wt% to about 100 wt% of the protein of all protein sources in the casing component; about 65 wt% to about 95 wt% of the protein of all protein sources in the casing component; about 70 wt% to about 90 wt% of the protein of all protein sources in the casing component; about 75 wt% to about 85 wt% of the protein of all protein sources in the casing component; about 70 wt% to about 80 wt% of the protein of all protein sources in the casing component; about 60 wt% of the protein of all protein sources in the casing component; about 65 wt% of the protein of all protein sources in the casing component; about 70 wt% of the protein of all protein sources in the casing component; about 75 wt% of the protein of all protein sources in the casing component; about 80 wt% of the protein of all protein sources in the casing component; about 85 wt% of the protein of all protein sources in the casing component; about 90 wt% of the protein of all protein sources in the casing component; or about 100 wt% of the protein of all protein sources in the casing component. In one embodiment, rice flour and graham flour contribute the balance of the protein in the protein source of casing component. In one embodiment, the protein source in the casing consists essentially of rice flour, soy flour and graham flour. In some embodiments, small amounts of additional protein may be contributed by other sources. In one embodiment, soy flour contributes about 87 wt% of the protein in the casing component, rice flour contributes about 3 wt% of the protein in the casing component, and graham flour contributes about 10 wt% of the protein in the casing component. In another embodiment, soy flour contributes about 71 wt% of the protein in the casing component, brown rice flour contributes about 11 wt% of the protein in the casing component, wheat (e.g., whole wheat) flour contributes about 14 wt% of the protein in the casing component, and other ingredients contribute about 4 wt%, or in some embodiments up to 4 wt%, of the protein in the casing component.

In some embodiments, additional ingredients may be included in the casing component based on, for example, desired taste, nutrition, texture, and visual appeal of the casing component. Exemplary additional ingredients can include, but are not limited to, whole grain ingredients (e.g., soy flour, brown rice flour, whole wheat flour), non-whole grain ingredients, fiber ingredients (e.g., oat fiber, inulin) may be included as processing aids and or fiber sources, processing ingredients (e.g., CaCO₃), sweetening ingredients (e.g., sugar, honey), flavor and/or texture inclusions, salt, colors, preservatives, water, and combinations thereof.

In some embodiments, the casing components of the present disclosure may contain at least one whole-grain ingredient. In some embodiments, all of the grain components contained in the product (or in just the casing) can come from a whole grain source. In some embodiments, only small portion of grain components are not from whole grain but there would still be about 7 g of whole grain per 30 g serving. For example, in some embodiments, soluble corn fiber and oat fiber is replaced with inulin. In some embodiments, a small amount of oat fiber may remain in the finished product but the product would still deliver on high levels of whole grain (e.g., 7 g of whole grain in a 30 g serving). Examples of whole-grain agents include soy flour, brown rice flour, whole wheat flour, and the like, and combinations thereof. The whole grain ingredient may be included in an amount of up to about 90 wt% of the casing component, and preferably in an amount of about 80 wt% to about 90 wt% of the casing component, based upon the dry weight of the casing.

In some embodiments, the whole grain component (e.g., the component comprising rice flour, soy flour and wheat flour) may be included at about 80 wt% of the casing based on dry weight of the casing, at about 82 wt% of the casing based on dry weight of the casing, at about 84 wt% of the casing based on dry weight of the casing, at about 86 wt% of the casing based on dry weight of the casing, at about 88 wt% of the casing based on dry weight of the casing, at about 90 wt% of the casing based on dry weight of the casing, or at about 92 wt% of the casing based on dry weight of the casing.

In some embodiments, the casing components of the present disclosure may also contain fiber sources. Exemplary fiber sources which may be used include oat fiber, inulin, and the like and combinations thereof. In particular, in some embodiments, oat fiber and inulin help to make the casing component more robust and pliable, and thus, less prone to breakage during processing while at the same time not detracting from the light, crisp texture of the casing component. The casing component may include a fiber blend, which may affect texture and/or moisture migration of the final product, as described in further detail below. In some embodiments, fiber sources may be included in an amount of up to about 1.0 wt% of the casing component, based upon the dry weight of the baked product, while still achieving a light crisp texture casing in the finished product.

In some embodiments, the casing component may contain a leavening system. Exemplary chemical leavening agents or pH-adjusting agents which may be used include alkaline materials and/or acidic materials such as sodium bicarbonate, calcium carbonate, ammonium bicarbonate, calcium acid phosphate, calcium phosphate monobasic, sodium acid pyrophosphate, diammonium phosphate, tartaric acid, mixtures thereof, and the like in combinations thereof. The leavening system may be included in an amount of up to about 2.5 wt% of the casing component, and preferably in an amount of up to about 1 wt% of the casing component, based upon the dry weight casing component.

Without wishing to be bound to a particular theory, in some embodiments, the impact of the types of leavening ingredients may be contributing to pH, color or texture and improving processing by allowing the casing extrudate to process more uniformly, acting as a nucleation material.

In some embodiments, the casing component includes sweetener ingredients. Examples of optional sweeteners include but are not limited to high-intensity artificial sweeteners, such as saccharin, sucralose, acesulfame potassium, and aspartame, and/or natural sugars or sweeteners such as fructose, glucose, sucrose, dextrose, corn syrup, high fructose corn syrup, honey, corn syrup solids, honey, and the like, and combinations thereof. The sweetener ingredients may be included in an amount of about 5 wt% to 10 wt% of the casing component, and in some embodiments in an amount of about 6 wt% to 7 wt% of the casing component.

In some embodiments, the casing component includes at least one flavor enhancer. Examples of such flavor enhancers include cocoa, vanilla, vanillin, mint, coffee, or other flavorings, and combinations thereof. In some embodiments, flavor enhancers may be included in amounts of less than 1 wt% of finished product and preferably in trace level amounts.

In addition to, or in substitution of one or more of the foregoing, the casing component employed in some embodiments of the present disclosure may include other additives conventionally employed in crackers, cookies, or cereals. Such additives may include, for example, flour substitutes or bulking agents, such as polydextrose, hollocellulose, microcrystalline cellulose, mixtures thereof, and the like; starches such as pre-gelatinized starch and potato starch, and the like; antimycotics or preservatives, such as calcium propionate, potassium sorbate, sorbic acid, and the like; emulsifiers, such as mono- and di-glycerides, polyoxyethylene sorbitan fatty acid esters, lecithin, stearoyl lactylates, and the like; processing aids, such as high oleic canola oil, soybean oil, safflower oil, palm oil, and/or derivatives thereof; and/or solid fats such as shortening, and the like; as well as inclusions or particulates that are appropriately sized to be extruded through a die without clogging the extruder or the die, and can withstand the high temperatures of the cooking/extrusion process, in conventional amounts.

In some embodiments, a casing component is formulated to provide a golden brown color in the final product. In some embodiments, a casing component is formulated to provide a golden brown color in the final product regardless of the drying conditions, including temperature and retention time. In some embodiments, the casing component includes cocoa. The casing component may include cocoa in an amount of about 0.5 wt% to about 5 wt% based on the dry weight of the casing component. In some embodiments, the casing component may be coated with a dextrose solution. The dextrose solution may include, for example, about 60 wt% dextrose and about 40 wt% water. The casing component may include dextrose in an amount of about 1 wt% to about 10 wt% of the total product weight. In some embodiments, the dextrose solution may be applied during an oil coating step. In some embodiments, it is believed that the inclusion of cocoa and/or the dextrose solution may surprisingly provide a golden brown color to the final product over a wide range of drying temperatures and retention times.

The inclusion of any amount of any additional ingredients, such as those described above, in the casing component may be adjusted to achieve the desired taste and texture of the casing component within the scope of the disclosure.

### Filling

The filling component is completely surrounded by the casing component of the coated extruded foodstuff. In some embodiments, the filling component is a fat-based filling. Suitable fat based fillings may include for example, fillings that contain about 2/3 fat and about 1/3 sugar or other sweeteners. In some embodiments, the fillings may include flavors or particulates, and may have various viscosities controlled by the level of fat resulting in liquid or soft filling versus a very firm filling. In some embodiments, any conventional filler for a snack product that is capable of being extruded through an extrusion die without clogging the extruder or die may be used. The filling component can include crème, jelly, peanut butter, jam, chocolate, pudding, caramel, spices or seasonings such as cinnamon, cheese, or other edible filler materials, and mixtures thereof. Fillings can include flavorings or other additives such as vanilla or vanillin, mint, fruit extracts, nut extracts, or coffee. Preferred fillings include crème fillings and chocolate fillings, such as a chocolate crème filling. A crème filling can be any conventional crème filling and can include a sweetener, a fat, a flavoring, an emulsifier, or any combination thereof. Some fillings may include water-based fillings. Suitable water based fillings include, for example, low Aw fruit fillings which may or may not contain fat in the filling, and cooked fruit fillings which may contain, for example, pectin, starch, sugar or other sugars with fresh fruit (e.g., strawberry, raspberry, blueberry, apple, and the like). Water based fillings may have a lower water activity or total water content or moisture. In some embodiments, suitable filling have water activity levels of about 0.3 to about 0.6, which may provide firmer fillings with bake stability.

In some embodiments, the filling component may include a fiber blend, which may affect texture and/or moisture migration of the final product, as described in further detail below.

The weight ratio of filling to casing component is about 40:60 The casing component covers the entire surface of the filling.

Exemplary fillings for the disclosure are also described in U.S. Pat. No. 6,863,911 granted March 8, 2005 to Zimeri et al., U.S. Pat. No. 5,612,078 granted March 18, 1997 to Fileti et al., U.S. Pat. No. 8,287,936 granted October 16, 2012 to Loh et al.

### Method

### General Description

A method of preparing an exemplary embodiment of the present invention is described as follows. Dry ingredients (such as, for example, brown rice flour, soy flour, graham flour, whole wheat flour, sugar, salt, vanilla, calcium carbonate, inulin, cocoa, and/or oat fiber) are scaled and mixed in a ribbon or paddle blender. Separately, a honey and water blend is prepared to the desired mixture ratio. In a third mixer, the foodstuff filling is prepared in a desired flavor (e.g., chocolate, vanilla, fruit, etc.). All three blends are subsequently introduced individually in a triple-extrusion, twin screw, and high shear cooking extruder where the extruder combines the ingredients under pressure (e.g., from about 1 psi to 13 psi under extrusion pressure of about 200 psi to about 800 psi with an air die pressure of about 1 psi to about 13 psi) and high temperatures. As the material exits the extruder, it passes through a triple-extrusion die where the filling is injected into the center of the extrudate, the casing is in the outer perimeter of the extrudate, and air is interposed between the casing and the filling during extrusion. Part of the water in the extrudate evaporates at atmospheric pressure. The resulting product is puffed, filled, continuous rope/ropes. The ropes are fed to a crimper/former to shape and then cut the rope into discrete pieces. The pieces are then transferred to a dryer to remove excess moisture to below about 5 wt%. From the first dryer, the extrudate is fed into a tumbling coating drum, where it is sprayed with about 2 wt% oil, and in some embodiments a dextrose solution, to provide flavor and color. The coated pieces are then conveyed to a second dryer to further cool the product to below about 150°F. Upon exiting the second furnace, the product is cooled below about 80°F to prevent water from condensing onto the product. The finished product may have a length of from about 19 mm to about 26 mm, a width of about 19 mm to about 26 mm, a height of about 7 mm to about 11 mm, a weight of about 1 g to about 1.75 g, a total moisture level of about 1 wt% to about 5 wt%, an empty weight (e.g., casing without the filling) of about 0.6 g to about 0.8 g, an Aw of about 0.2 to about 0.5 and a wall thickness of the casing of about 1.4 mm to about 2.8 mm. The final product is then sent to packaging in various sizes.

### Texture Determination of the Extruded Snack Product

Determination of texture for the extruded snack product may be measured by shearing or crushing individual sample pieces using a texture analyzer comprising a guillotine-supported flat-bottom blade (about 3 mm thick and about 69.8 mm wide) and a slotted base. The sample is prepared for testing by disposing the individual sample piece on the slotted base and centering under the blade. The sample is oriented so that the blade will pass through the crimped edges on the broad side of the sample. During operation, the blade of the texture analyzer saws through the sample to shear and crush both the top and bottom shell or crust of the sample. Force measurements are taken intermittently during the sawing process and the maximum force generated equals the sample hardness (tabulated in units of grams of maximum force). Similar testing is conducted for several samples and a composite average of the maximum force represents the hardness for the class of samples tested.

### Final Product

The following description is meant for illustrative purposes only and not meant to be construed as limiting the scope of the invention, but rather, merely as one example.

In an embodiment of the invention, the final product foodstuff will have a length dimension of about 19 mm to about 26 mm, a width dimension of about 19 mm to about 26 mm, and a height of about 7 mm to about 11 mm. These sizes provide adequate bite-size qualities and anything smaller would be categorized as miniature, which is a wholly different product. Furthermore, smaller products may lack the requisite shape, resulting in a flat, denser product rather than a light and crispy puffed product.

The weight ratio of filling to casing component is about 40:60. casing component covers the entire surface of the filling. In some embodiments, the casing component embodies 56 wt% to 61 wt% of the final product and the filling embodies 36 wt% to 41 wt% of the final product. At these levels, the foodstuff may attain the desired dual texture of light and crispy of the casing component and the soft and creamy filling interior.

In one embodiment, the finished product is configured in a bite size configuration that has a total volume of about 6300 cubic millimeters. In some embodiments, this represents approximately twice the volume of products produced without the use of the triple extrusion air die. Embodiments of the products produced using the triple extrusion technique may shrink less during processing thereby promoting the desired texture, filling packaging to a greater extent and enhancing the consumer experience. In some embodiments, triple extrusion of formulations of the present invention results in a product having a texture that is more crispy and less crunchy than a product with otherwise substantially identical casing formulation and filling formulation but which is co-extruded without an interposed air extrusion stream.

In one embodiment, texture of the finished product is determined using a texture analyzer and the method described above. Hardness the final product is 1500 grams of maximum force to 4000 grams of maximum force; about 2000 grams of maximum force to about 3500 grams of maximum force; about 2500 grams of maximum force to about 3000 grams of maximum force; 1500 grams per maximum break force; about 2000 grams per maximum break force; about 2500 grams per maximum break force; about 3000 grams per maximum break force; about 3500 grams per maximum break force; about 4000 grams per maximum break force.

### Dual-Texture Embodiment

In some embodiments, the foodstuff of the present invention exhibits dual textures. For example, in some embodiments, the foodstuff has a soft portion (e.g., a filling) and a crispy and/or crunchy dough-based portion (e.g., a casing). The foodstuff may maintain a multiple texture (e.g. a dual texture) for an extended period of time after cooking (e.g., baking, frying) and, in some embodiments, throughout the shelf life of the foodstuff. The dual-textured foodstuff may be generally prepared by forming dough as described throughout this application, adding a soft-textured portion, such as a filling as described throughout this application, to create an unbaked foodstuff, and baking and/or drying to form the dual-textured foodstuff having a crispy dough-based portion and a soft filling portion. The dough-based portion is formed to completely surround the filling portion. In some embodiments, the filling portion is in direct contact with the dough-based portion of the foodstuff. In some embodiments, the dual texture of the foodstuff is maintained over a prolonged period of time by formulating the dough-based portion and/or filling portion to include a fiber blend. A fiber blend, as described in further detail herein, may contain one or more types of fiber.

In one embodiment, the foodstuff includes a dough-based portion (e.g., a casing or a layer) that affects moisture migration from an adjoining soft filling portion. The dough-based portion of the foodstuff may affect moisture migration from the adjoining filling portion such that the moisture equilibrates at a point where a dual-texture is maintained even when the filling portion has a high relative humidity (e.g., about 0.6 to about 0.8), when the foodstuff has a high percentage of filling (e.g., about 35 wt% to about 60 wt% of the foodstuff), and/or when the foodstuff has an overall relative humidity of about 0.5 to about 0.7.

In some embodiments, it is desirable to produce a dual-texture product that contains fiber. In some cases, it is preferable to include a good source of fiber (e.g., at least 2.5 g/serving) or higher (e.g., an excellent source of fiber, at least 5 g/serving). A variety of challenges may exist in producing such products that deliver good consumer perceptions of taste and texture while maintaining high enough levels of fiber to be a good source of fiber or higher. Products such as filled dough-based products that have low filling levels can be perceived by consumers as too dry, too crunchy, or too crispy. That perception could be magnified when one adds levels of fiber (e.g., to the filling, to the casing or to both) to deliver a good source or higher. Filled dough-based products with high levels of filling can be perceived by consumers as too soft and/or delivering a first bite that is not desirable. Adding a higher level of fiber to such high filling level products may reduce the softness of the product, particularly if the high levels of fiber are added to the casing. Higher fiber levels in the filling and/or casing can also degrade taste and/or deliver a texture experience that is not desirable (e.g., to deliver a filling texture that is too stiff for a palatable consumer experience).

In some embodiments, the addition of fiber under the appropriate conditions can deliver consumer palatable dual-texture dough-based filled products over a prolonged shelf-life of the product. Indeed, in some embodiments, the foodstuff's impact on moisture migration and equilibration in order to maintain its dual-texture for a prolonged period of time may be related to the inclusion of fiber, such as a selected fiber blend in the dough-based portion and/or the filling portion. Without wishing to be bound by theory, it is believed that selection of an appropriate fiber blend and fiber level may help to retain the moisture in the respective portions, prevent the moisture from migrating and/or control moisture equilibrium between a filling and a casing. The foodstuff, the fiber blend, and the ability to maintain a dual texture throughout the shelf life of the foodstuff will be discussed in further detail below.

In some embodiments, a foodstuff includes a fiber blend in the dough-based portion and/or the filling portion of the foodstuff. The foodstuffs ability to deliver an appropriate texture, taste and fiber level (e.g., to meet a "good source of fiber" health claim or higher) for a prolonged period of time may be affected by one or more factors related to the included fiber in the product, including: i) the total amount of fiber blend in the foodstuff; ii) the apportionment of the fiber blend(s) in the dough-based portion versus the filling portion of the foodstuff; iii) the apportionment of the total amount of fiber per serving in the dough-based portion versus the filling portion of the foodstuff; iv) the weight ratio of soluble to insoluble fiber in the fiber blend; v) the specific type(s) and amount(s) of fiber(s) included in the soluble fiber portion of the fiber blend; vi) the specific type(s) and amount(s) of fiber(s) included in the insoluble fiber portion of the fiber blend ; vii) the specific type(s) and amount(s) of fiber(s) included in the fiber blend; and viii) combinations of one or more of the foregoing. Embodiments of some fiber blends of the present disclosure may be desirable because, in addition to affecting moisture migration, moisture equilibrium, and/or relative humidity of the product, the fiber blends do not negatively impact the flavor and/or texture of the dough-based component or the filling component of the foodstuff.

In some embodiments, a fiber blend may contain one or more types of fiber. In some embodiments, the fiber blend in the dough-based portion and in the filling portion of the foodstuff may be the same or substantially the same fiber blend. In other embodiments, the fiber blend in the dough-based portion and in the filling portion of the foodstuff may be formulated differently. As used herein, unless specified otherwise the term fiber blend can refer to either the dough-based portion fiber blend or the filling portion fiber blend.

The fiber blend may include both soluble and insoluble fiber. Suitable soluble fiber may include but is not limited to one or more of dextrin, glucomannan, psyllium, resistant maltodextrin, soluble corn fiber, polydextrose, fructooligosaccharide, oligosaccharaide, and/or combinations thereof. Suitable insoluble fiber may include but is not limited to one or more of fruit pomace and cereal bran such as oat, resistant starch, corn wheat, and/or combinations thereof. In some embodiments, the fiber blend includes soluble and insoluble fiber in a weight ratio of soluble to insoluble fiber of about 10:1 to about 0.2:1; about 9:1 to about 0.4:1; about 9:1 to about 0.43:1; about 8:1 to about 0.5:1; about 7:1 to about 0.6:1; about 6:1 to about 0.8:1; about 5:1 to about 1:1; about 4:1 to about 1.2:1; about 3:1 to about 1.4:1; about 3:1 to about 1:1; about 2.3:1 to about 1.5:1; about 2:1 to about 1.8:1; about 10:1; about 9:1; about 8:1; about 7:1; about 6:1; about 5:1; about 4:1; about 3:1; about 2.3:1; about 2:1; about 1:1; about 1.8:1; about 1.5:1; about 1.4:1; about 1.2:1; about 0.8:1; about 0.6:1; about 0.5:1; about 0.43:1; about 0.4:1; or about 0.2:1.

In some embodiments, the soluble fiber in the fiber blend includes a combination of more than one type of soluble fiber. For example, in one embodiment, the soluble fiber in the fiber blend includes soluble corn fiber and resistant maltodextrin. In some embodiments, the soluble fiber in the fiber blend includes soluble corn fiber and resistant maltodextrin in a weight ratio of soluble corn fiber to resistant maltodextrin of about 1:1 to about 9:1; about 2:1 to about 8:1; about 3:1 to about 7:1; about 4:1 to about 6:1; about 1:1; about 2:1; about 3:1; about 4:1; about 5:1; about 6:1; about 7:1; about 8:1; or about 9:1.

In some embodiments, the foodstuff includes a total amount of fiber per serving of about 1 g to about 7 g; about 1.5 g to about 6.5 g; about 2 g to about 6 g; about 2.5 g to about 5.5 g; about 2.5 g to about 5 g; about 3 g to about 4.5 g; about 1 g; about 1.5 g; about 2 g; about 2.5 g; about 3 g; about 3.5 g; about 4 g; about 4.5 g; about 5 g; about 5.5 g; about 6 g; about 6.5 g; or about 7 g. In some embodiments, a serving is about 20 g to about 40 g; about 25 g to about 35 g; about 20 g; about 25 g; about 30 g; about 35 g; or about 40 g. In some embodiments, the foodstuff includes fiber in an amount of about 5 wt% to about 20 wt% of the foodstuff; about 6 wt% to about 19 wt% of the foodstuff; about 7 wt% to about 18 wt% of the foodstuff; about 8 wt% to about 17 wt% of the foodstuff; about 9 wt% to about 16 wt% of the foodstuff; about 10 wt% to about 15 wt% of the foodstuff; about 11 wt% to about 14 wt% of the foodstuff; about 12 wt% to about 13 wt% of the foodstuff; about 5 wt% of the foodstuff; about 6 wt% of the foodstuff; about 7 wt% of the foodstuff; about 8 wt% of the foodstuff; about 9 wt% of the foodstuff; about 10 wt% of the foodstuff; about 11 wt% of the foodstuff; about 12 wt% of the foodstuff; about 13 wt% of the foodstuff; about 14 wt% of the foodstuff; about 15 wt% of the foodstuff; about 16 wt% of the foodstuff; about 17 wt% of the foodstuff; about 18 wt% of the foodstuff; about 19 wt% of the foodstuff; or about 20 wt% of the foodstuff.

In some embodiments, the dough-based portion of the foodstuff contains about 35 wt% to about 65 wt% of the total fiber of the foodstuff; about 40 wt% to about 60 wt% of the total fiber of the foodstuff; about 45 wt% to about 55 wt% of the total fiber of the foodstuff; about 35 wt% of the total fiber of the foodstuff; about 40 wt% of the total fiber of the foodstuff; about 45 wt% of the total fiber of the foodstuff; about 50 wt% of the total fiber of the foodstuff; about 55 wt% of the total fiber of the foodstuff; about 55 wt% of the total fiber of the foodstuff; about 60 wt% of the total fiber of the foodstuff; or about 65 wt% of the total fiber of the foodstuff. Likewise, in some embodiments, the filling portion of the foodstuff contains about 35 wt% to about 65 wt% of the total fiber of the foodstuff; about 40 wt% to about 60 wt% of the total fiber of the foodstuff; about 45 wt% to about 55 wt% of the total fiber of the foodstuff; about 35 wt% of the total fiber of the foodstuff; about 40 wt% of the total fiber of the foodstuff; about 45 wt% of the total fiber of the foodstuff; about 50 wt% of the total fiber of the foodstuff; about 55 wt% of the total fiber of the foodstuff; about 55 wt% of the total fiber of the foodstuff; about 60 wt% of the total fiber of the foodstuff; or about 65 wt% of the total fiber of the foodstuff. In some embodiments, the fiber in the dough-based portion and the fiber in the filling portion is present in a weight ratio of fiber in the dough-based portion to fiber in the filling portion of about 35:65 to about 65:35; about 40:60 to about 60:40; about 45:55 to about 55:45; about 35:65; about 40:60; about 45:55; about 50:50; about 55:45; about 60:40; or about 65:35.

In some embodiments, the dough-based portion fiber blend and the filling portion fiber blend are present in the foodstuff in a weight ratio of dough-based portion fiber blend to filling portion fiber blend of about 35:65 to about 65:35; about 40:60 to about 60:40; about 45:55 to about 55:45; about 35:65; about 40:60; about 45:55; about 50:50; about 55:45; about 60:40; or about 65:35.

In some embodiments, the filling component fiber blend is present in the filling portion in an amount of about 1 wt% to about 14 wt% of the filling portion; about 2 wt% to about 13 wt% of the filling portion; about 3 wt% to about 12 wt% of the filling portion; about 4 wt% to about 11 wt% of the filling portion; about 5 wt% to about 10 wt% of the filling portion; about 6 wt% to about 9 wt% of the filling portion; about 7 wt% to about 8 wt% of the filling portion; about 1 wt% of the filling portion; about 2 wt% of the filling portion; about 3 wt% of the filling portion; about 4 wt% of the filling portion; about 5 wt% of the filling portion; about 6 wt% of the filling portion; about 7 wt% of the filling portion; about 8 wt% of the filling portion; about 9 wt% of the filling portion; about 10 wt% of the filling portion; about 11 wt% of the filling portion; about 12 wt% of the filling portion; about 13 wt% of the filling portion; or about 14 wt% of the filling portion.

In some embodiments, the dough-based portion fiber blend is present in the dough-based portion in an amount of about 1 wt% to about 14 wt% of the dough-based portion; about 2 wt% to about 13 wt% of the dough-based portion; about 3 wt% to about 12 wt% of the dough-based portion; about 4 wt% to about 11 wt% of the dough-based portion; about 5 wt% to about 10 wt% of the dough-based portion; about 6 wt% to about 9 wt% of the dough-based portion; about 7 wt% to about 8 wt% of the dough-based portion; about 1 wt% of the dough-based portion; about 2 wt% of the dough-based portion; about 3 wt% of the dough-based portion; about 4 wt% of the dough-based portion; about 5 wt% of the dough-based portion; about 6 wt% of the dough-based portion; about 7 wt% of the dough-based portion; about 8 wt% of the dough-based portion; about 9 wt% of the dough-based portion; about 10 wt% of the dough-based portion; about 11 wt% of the dough-based portion; about 12 wt% of the dough-based portion; about 13 wt% of the dough-based portion; or about 14 wt% of the dough-based portion.

In one exemplary embodiment, the foodstuff includes a total fiber content per serving of about 2.5 g to about 5.0 g of fiber; a dough-based portion including about 40 wt% to about 60 wt% of the total fiber content, with a dough-based portion fiber blend having soluble fiber and insoluble fiber in a weight ratio of about 9:1 to about 0.43:1; and a filling portion fiber blend including soluble fiber and insoluble fiber in a weight ratio of about 9:1 to about 0.43:1.

The foodstuffs ability to resist moisture migration, as well as its ability to provide and maintain a desirable dual-texture for a prolonged period of time may also be affected by one or more factors related to properties of the foodstuff including, for example, the total relative humidity of the foodstuff and/or the amount of dough-based portion and filling portion in the foodstuff.

In some embodiments, the foodstuff has a relative humidity of below about 0.8; below about 0.7; below about 0.6; below about 0.5; about 0.3 to about 0.9; about 0.4 to about 0.8; about 0.5 to about 0.7; about 0.3; about 0.4; about 0.5; about 0.6; about 0.7; about 0.8; or about 0.9. Such relative humidity values may correlate with a foodstuff having a desirable amount of high water activity soft filling, while still having a crispy, lower water activity dough-based portion to provide a dual-textured product.

The baked foodstuff of the present invention may exhibit a dual texture including a crispy dough-based portion, such as a casing, and a soft portion, such as a filling. In some embodiments, the dough-based portion exhibits a cracker- or pretzel-like texture. In some embodiments, the dual texture is maintained throughout the shelf life of the foodstuff. In some embodiments, a baked foodstuff maintains its dual texture for at least 1 month, for at least 2 months, for at least 3 months for at least 6 months, for at least 1 year and/or for at least 2 years.

In some embodiments, the properties of the foodstuff affect moisture equilibrium between the dough-based portion and the filling portion, in order to maintain the dual texture of the foodstuff. In some embodiments, moisture can migrate between the dough-based portion and the filling portion and equilibrate at a point which still maintains a dual texture of the foodstuff, due to unique properties resulting from factors such as: i) the type of fiber used; ii) the weight ratio of insoluble to soluble fiber used; iii) the distribution of the fiber (e.g., in the casing, the filling, or both); iv) the relative amount of fiber in the casing versus the filling; v) the filling level of the product; vi) the fiber level in the product; and vii) combinations of one or more of the foregoing. As a result, the inclusion of and the nature of the fiber blend in the filling portion and/or the dough-based portion of the foodstuff may affect the equilibrium distribution of moisture between dough-based portion and filling portion of the foodstuff during preparation, drying, and/or throughout a shelf-life of the foodstuff. The dough-based portion of the foodstuff may affect moisture migration from the adjoining filling portion such that the moisture equilibrates at a point where a dual-texture is maintained even when the filling portion has a high relative humidity, such as about 0.6 to about 0.8, despite the foodstuff including a high percentage of filling, such as about 35 wt% to about 60 wt% of the foodstuff, and despite the foodstuff having an overall relative humidity of about 0.5 to about 0.7. While not wishing to be bound by theory, the inclusion of the fiber blend in the dough-based portion may help to retain crispiness by enhancing the development of a matrix, such as a wall structure around air cells.

A foodstuff prepared from a dough-based portion and a filling portion according to embodiments of the present disclosure may provide maintenance of acceptable moisture levels in the filling portion during baking and throughout a shelf-life of the foodstuff. Such maintenance of moisture levels may allow for a more distinct dual texture, with the filling being soft and moist and the dough-based portion being crispier and drier.

As used herein, the term "about" is understood to mean ±10% of the value referenced. For example, "about 45%" is understood to literally mean 40.5% to 49.5%.

### Examples

The following examples, while illustrative of individual embodiments, are not intended to limit the scope of the described invention, and the reader should not interpret them in this way.

### Example 1

In one example of the casing formulation, the level of each ingredient may be introduced into the extruder as follows:

| **Ingredient** | **Lower Limit (%)** | **Upper Limit (%)** |
|---|---|---|
| Brown rice flour | 10.8 | 11.9 |
| Soy flour | 42.4 | 46.9 |
| Whole wheat flour | 20.8 | 23.0 |
| Sugar | 4.8 | 5.3 |
| Salt | 0.86 | 0.89 |
| Vanilla | 0.07 | 0.08 |
| Calcium carbonate | 1.02 | 1.04 |
| Inulin | 0.5 | 0.6 |
| Oat fiber | 0.2 | 0.3 |
| Honey | 1.6 | 1.7 |
| Water | 12.0 | 13.2 |

The sample produced according to the example and according to the texture determination method described below, will produce a product having a hardness of from about 1500 grams per maximum break force to about 4000 grams per maximum break force.

### Example 2

In one example of the casing formulation, the level of each ingredient is included in the following dry weight basis:

| **Ingredient** | **Lower Limit (%)** | **Upper Limit (%)** |
|---|---|---|
| Brown rice flour | 13 | 14 |
| Soy flour | 52.5 | 54 |
| Graham flour | 26 | 27 |
| Sugar | 2.5 | 4 |
| Salt | 0.5 | 1.5 |
| Vanilla | 0.07 | 0.11 |
| Calcium carbonate | 1 | 1.5 |
| Inulin | 0.2 | 0.5 |
| Oat fiber | 0.1 | 0.2 |
| Natural cocoa | 0.5 | 1.5 |

A spray coating was added during the oil coating step. The spray included about 60 wt% dextrose and about 40 wt% water, and was added in an amount of about 1.5 wt% of the total product weight. The product exhibited a desirable golden brown color.

### Example 3

A dough was prepared from the following formulation:

| **INGREDIENTS** | **Wt%** |
|---|---|
| Flour | 65% to 95% |
| Granulated sugar | 0% to 20% |
| Dough salt | 0% to 2% |
| Calcium carbonate | 0% to 2% |
| Soluble corn fiber | 5% |
| Resistant maltodextrin | 1% |
| Oat fiber | 2% |
| Water | 5% to 50% |
| | 100.00% |

A filling was prepared according to the following formulation:

| **Ingredients** | **Wt (lb)** |
|---|---|
| Sugar (including syrups) | 200 to 700 |
| Fruit (powder, puree, fiber) | 10 to 200 |
| Soluble corn fiber | 53.4 |
| Water | 15 to 100 |
| starch | 20 to 100 |
| Oat fiber | 23.4 |
| Texturizers, acidulants, preservatives | 10 to 50 |
| Resistant maltodextrin | 12.1 |
| Natural/artificial color and flavors | 0 to 20 |
| Salt | 5.6 |

The dough and filling were coextruded in a weight ratio of 55% dough and 45% filling to product an unbaked foodstuff. The baked product displayed desirable dual texture (having a soft moist filling and a crispy dough-based casing) that resisted moisture migration.

### Example 4

Dough-based portions were prepared and tested with different fiber blends, according to the formulations below:

| **Formula 1** | **Wt% of Fibers** | **Wt Ratio of Soluble to Insoluble Fiber** |
|---|---|---|
| Soluble corn fiber | 61 | 3 |
| Resistant maltodextrin | 14 | |
| Oat fiber | 25 | 1 |

| **Formula 2** | | Wt Ratio |
|---|---|---|
| Soluble corn fiber | 90 | 9 |
| Oat fiber | 10 | 1 |

| **Formula 3** | | Wt Ratio |
|---|---|---|
| Soluble corn fiber | 30 | 0.43 |
| Oat fiber | 70 | 1 |
| | 1.00 | |

The ratios listed in the table above represent the weight ratio of soluble fiber to insoluble fiber. Formula 1 included soluble fiber (soluble corn fiber and resistant maltodextrin) in a weight ratio of 3:1. Formula 2 included soluble fiber to insoluble fiber in a weight ratio of 9:1, and Formula 3 included soluble fiber to insoluble fiber in a weight ratio of 0.43:1.

Products for formulae 1, 2 and 3 described above were analyzed in a qualitative panel. The panel found that the texture of the foodstuffs prepared with the fiber blends of Formulae 1, 2, and 3 were each deemed acceptable, as they exhibited a dual texture having a crispy dough-based portion and a soft filling.

The results also demonstrated that the fiber ranges impact the texture and processing of the dough-based portion. Formula 3 resulted in a foodstuff with a dough-based portion that was softer, while Formula 2 resulted in a foodstuff with a dough-based portion that was drier. Formula 1 resulted in a foodstuff with a dough-based portion that was in between the textures of the foodstuffs including Formula 2 and Formula 3.

### Example 5

Foodstuffs were prepared with varying fiber blend levels in the filling and in the dough, and with varying amounts of filling in the foodstuff, as follows:

| **Run** | **Filler Fiber (wt%)** | **Casing Fiber (wt%)** | **Filler Level (wt%)** |
|---|---|---|---|
| 1 | 3.6 | 0 | 50 |
| 2 | 0 | 3.2 | 35 |
| 3 | 4 | 4 | 35 |
| 4 | 1 | 7 | 50 |
| 5 | 0 | 0 | 50 |
| 6 | 2.5 | 2.5 | 50 |
| 7 | 6 | 0 | 35 |
| 8 | 2.5 | 4 | 35 |
| 9 | 0 | 4 | 50 |
| 10 | 0 | 8 | 35 |
| 11 | 6 | 2 | 50 |
| 12 | 1.8 | 0 | 35 |

It was observed that the foodstuffs with less filling had crispier dough-based portions and less taste from the filling, while the foodstuffs with more filling had less crispy dough-based portions and fuller flavor from the filling. Additionally, the foodstuffs including fiber in both the filling and the dough-based portion demonstrated a crispier texture, which remained crispier over time.

### Example 6

Foodstuffs were prepared with varying fiber blend levels in the filling and in the dough, and with 40-45 wt% filling in the foodstuff, as follows:

| | **Factor 1** | **Factor 2** | **Factor 3** | **No Coating** |
|---|---|---|---|---|
| **Run** | **Filling Fiber (wt%)** | **Casing Fiber (wt%)** | **Filling Amt (wt%)** | **Piece RH (wt%)** |
| 1 | 0 | 8 | 45 | 0.513 |
| 2 | 8 | 0 | 45 | 0.53 |
| 3 | 4 | 4 | 42.5 | 0.522 |
| 4 | 0 | 0 | 40 | 0.515 |
| 5 | 0 | 8 | 40 | 0.521 |
| 6 | 8 | 0 | 40 | 0.487 |
| 7 | 0 | 0 | 45 | 0.505 |
| 8 | 8 | 8 | 45 | 0.53 |
| 9 | 8 | 8 | 40 | 0.52 |
| 10 | 4 | 4 | 42.5 | 0.515 |
| 11 | Add-on | Add-on | Add-on | 0.532 |
| 12 | Add-on | Add-on | Add-on | 0.529 |

It was observed that the foodstuffs with less filling had crispier dough-based portions and less taste from the filling, while the foodstuffs with more filling had less crispy dough-based portions and fuller flavor from the filling. Additionally, the foodstuffs including fiber in both the filling and the dough-based portion demonstrated a crispier texture, which remained crispier over time. Sample 8 demonstrated the best combination of a full flavor and crispy dough-based portion.

## Claims

1. A baked, triple-extruded, bite-size foodstuff snack product comprising:
(a) an extruded dough-based casing component including a protein source comprising soy flour protein, the casing having a protein level of at least 6% by weight of the casing component, and having a maximum break force of 1500 grams to 4000 grams as measured as described herein with reference to paragraph [0041] of the description; and
(b) an extruded filling component completely surrounded by the casing component,
wherein the weight ratio of the casing component to the filling component in the extruded food stuff is about 60:40;
wherein the casing component and filling component are triple extruded with an air die;
and
wherein the product includes at least 5 grams of protein in 30 grams of product.

2. The triple-extruded foodstuff of claim 1, wherein the casing component has a length of from 19 mm to 26 mm.

3. The triple-extruded foodstuff of any of the preceding claims, wherein the casing component has a width of from 19 mm to 26 mm.

4. The triple-extruded foodstuff of any of the preceding claims, wherein the casing component has a height of from 7 mm to 11 mm.

5. The triple-extruded foodstuff of any of the preceding claims, wherein at least 70% of the protein in the casing component is derived from soy flour.

6. The triple-extruded foodstuff of any of the preceding claims, wherein the casing component further comprises whole wheat flour, graham flour, brown rice flour, sugar, salt, vanillin, and honey.

7. The triple-extruded foodstuff of any of the preceding claims, wherein the casing component further comprises calcium carbonate, inulin, and oat fiber.

8. The triple-extruded foodstuff of any of the preceding claims, wherein the filling component comprises at least one of a fat-based chocolate-flavored creme, a fat-based vanilla-flavored creme, a fat-based fruit creme, and a water-based fruit filling.

9. The triple-extruded foodstuff of any of the preceding claims, wherein the casing component includes from 20 wt% to 25 wt% whole wheat flour and from 10 wt% to 12 wt% brown rice flour.

10. The triple-extruded foodstuff of any of the preceding claims, wherein the casing component includes up to 2 wt% calcium carbonate, up to 1 wt% inulin, and up to 0.5 wt% oat fiber.

11. The triple-extruded foodstuff of claim 7, wherein the casing component consists essentially of soy flour, whole wheat flour, brown rice flour, sugar, salt, vanilla, honey, calcium carbonate, inulin, oat fiber, and water.

## Patentansprüche

1. Gebackenes, dreifach extrudiertes Nahrungsmittel-Snackprodukt in Bissgröße, umfassend:
(a) eine extrudierte Hüllenkomponente auf Teigbasis einschließlich einer Proteinquelle, die Sojamehlprotein umfasst, wobei die Hülle einen Proteingehalt von mindestens 6 Gew.-% der Hüllenkomponente aufweist und eine maximale Bruchkraft von 1500 Gramm bis 4000 Gramm aufweist, wie hierin unter Bezugnahme auf Absatz [0041] der Beschreibung beschrieben gemessen; und
(b) eine extrudierte Füllkomponente, die vollständig von der Hüllenkomponente umgeben ist,
wobei das Gewichtsverhältnis der Hüllenkomponente zu der Füllkomponente in dem extrudierten Nahrungsmittel etwa 60:40 beträgt;
wobei die Hüllenkomponente und die Füllkomponente mit einer Luftdüse dreifach extrudiert werden; und
wobei das Produkt mindestens 5 Gramm Protein in 30 Gramm Produkt enthält.

2. Dreifach extrudiertes Nahrungsmittel nach Anspruch 1, wobei die Hüllenkomponente eine Länge von 19 mm bis 26 mm aufweist.

3. Dreifach extrudiertes Nahrungsmittel nach einem der vorstehenden Ansprüche, wobei die Hüllenkomponente eine Breite von 19 mm bis 26 mm aufweist.

4. Dreifach extrudiertes Nahrungsmittel nach einem der vorstehenden Ansprüche, wobei die Hüllenkomponente eine Höhe von 7 mm bis 11 mm aufweist.

5. Dreifach extrudiertes Nahrungsmittel nach einem der vorstehenden Ansprüche, wobei mindestens 70 % des Proteins in der Hüllenkomponente von Sojamehl abgeleitet ist.

6. Dreifach extrudiertes Nahrungsmittel nach einem der vorstehenden Ansprüche, wobei die Hüllenkomponente ferner Vollweizenmehl, Grahammehl, braunem Reismehl, Zucker, Salz, Vanillin und Honig umfasst.

7. Dreifach extrudiertes Nahrungsmittel nach einem der vorstehenden Ansprüche, wobei die Hüllenkomponente ferner Calciumcarbonat, Inulin und Haferfaser umfasst.

8. Dreifach extrudiertes Nahrungsmittel nach einem der vorstehenden Ansprüche, wobei die Füllungskomponente mindestens eine von einer Schokoladenaroma-Creme auf Fettbasis, einer Vanillearoma-Creme auf Fettbasis, einer Fruchtcreme auf Fettbasis und einer Fruchtfüllung auf Wasserbasis umfasst.

9. Dreifach extrudiertes Nahrungsmittel nach einem der vorstehenden Ansprüche, wobei die Hüllenkomponente zu 20 Gew.-% bis 25 Gew.-% Vollweizenmehl und zu 10 Gew.-% bis 12 Gew.-% Braunreismehl enthält.

10. Dreifach extrudiertes Nahrungsmittel nach einem der vorstehenden Ansprüche, wobei die Hüllenkomponente zu bis zu 2 Gew.-% Calciumcarbonat, zu bis zu 1 Gew.-% Inulin und zu bis zu 0,5 Gew.-% Haferfaser enthält.

11. Dreifach extrudiertes Nahrungsmittel nach Anspruch 7, wobei die Hüllenkomponente im Wesentlichen aus Sojamehl, Vollweizenmehl, braunem Reismehl, Zucker, Salz, Vanille, Honig, Calciumcarbonat, Inulin, Haferfaser und Wasser besteht.

## Revendications

1. Produit d'en-cas alimentaire de la taille d'une bouchée, cuit au four, triplement extrudé comprenant :
(a) un composant d'enveloppement extrudé à base de pâte incluant une source de protéines comprenant une protéine de farine de soja, l'enveloppement ayant un taux de protéines d'au moins 6 % en poids du composant d'enveloppement, et ayant une force maximale de rupture de 1500 grammes à 4000 grammes telle que mesurée de la manière décrite ici en référence au paragraphe [0041] de la description ; et
(b) un composant de fourrage extrudé complètement entouré par le composant d'enveloppement,
dans lequel le rapport pondéral du composant d'enveloppement au composant de fourrage dans le produit alimentaire extrudé est d'environ 60:40 ;
dans lequel le composant d'enveloppement et le composant de fourrage sont triplement extrudés avec une matrice pneumatique ; et
dans lequel le produit inclut au moins 5 grammes de protéines dans 30 grammes de produit.

2. Produit alimentaire triplement extrudé selon la revendication 1, dans lequel le composant d'enveloppement a une longueur allant de 19 mm à 26 mm.

3. Produit alimentaire triplement extrudé selon l'une quelconque des revendications précédentes, dans lequel le composant d'enveloppement a une largeur allant de 19 mm à 26 mm.

4. Produit alimentaire triplement extrudé selon l'une quelconque des revendications précédentes, dans lequel le composant d'enveloppement a une hauteur allant de 7 mm à 11 mm.

5. Produit alimentaire triplement extrudé selon l'une quelconque des revendications précédentes, dans lequel au moins 70 % de la protéine dans le composant d'enveloppement est dérivée de farine de soja.

6. Produit alimentaire triplement extrudé selon l'une quelconque des revendications précédentes, dans lequel le composant d'enveloppement comprend en outre de la farine de blé complet, de la farine Graham, de la farine de riz brun, du sucre, du sel, de la vanilline, et du miel.

7. Produit alimentaire triplement extrudé selon l'une quelconque des revendications précédentes, dans lequel le composant d'enveloppement comprend en outre du carbonate de calcium, de l'inuline, et de la fibre d'avoine.

8. Produit alimentaire triplement extrudé selon l'une quelconque des revendications précédentes, dans lequel le composant de fourrage comprend au moins l'un parmi une crème aromatisée au chocolat à base de matière grasse, une crème aromatisée à la vanille à base de matière grasse, une crème de fruits à base de matière grasse, et un fourrage de fruits à base d'eau.

9. Produit alimentaire triplement extrudé selon l'une quelconque des revendications précédentes, dans lequel le composant d'enveloppement inclut de 20 % en poids à 25 % en poids de farine de blé complet et de 10 % en poids à 12 % en poids de farine de riz brun.

10. Produit alimentaire triplement extrudé selon l'une quelconque des revendications précédentes, dans lequel le composant d'enveloppement inclut jusqu'à 2 % en poids de carbonate de calcium, jusqu'à 1 % en poids d'inuline, et jusqu'à 0,5 % en poids de fibre d'avoine.

11. Produit alimentaire triplement extrudé selon la revendication 7, dans lequel le composant d'enveloppement est constitué sensiblement de farine de soja, de farine de blé complet, de farine de riz brun, de sucre, de sel, de vanille, de miel, de carbonate de calcium, d'inuline, de fibre d'avoine, et d'eau.
